# EUROPÄISCHE PATENTSCHRIFT

(11) **EP 2 195 220 B1**
(45) Veröffentlichungstag und Bekanntmachung des Hinweises auf die Patenterteilung: **19.12.2012**
(21) Anmeldenummer: 08758519.6
(22) Anmeldetag: 14.05.2008
(51) Int. Cl.: B62B 1/12, B62B 5/00

(54) **TROLLEY**
TROLLEY
CHARIOT

(30) Priorität: 05.10.2007 EP 07019576
(43) Veröffentlichungstag der Anmeldung: 16.06.2010
(73) Patentinhaber: Go-Trolley GmbH, 1040 Wien (AT)
(72) Erfinder: PACHLER, Robert, A-1060 Wien (AT)
(74) Vertreter: Dilg, Haeusler, Schindelmann Patentanwaltsgesellschaft mbH
(86) Internationale Anmeldenummer: PCT/EP2008/003873
(87) Internationale Veröffentlichungsnummer: WO 2009/046775

(56) Entgegenhaltungen:
- AT-U1- 8 447
- DE-U1-202005 008 804
- FR-A- 2 898 341
- US-A- 3 279 811

## Beschreibung

Die Erfindung betrifft eine Transportvorrichtung.

Die Erfindung betrifft ferner ein Verfahren zum Montieren einer Transportvorrichtung.

Eine Transportvorrichtung kann beispielsweise durch eine beladene Sackkarre gegeben sein. Eine in einem Behälter befindliche Last kann auf ein Trageelement gelegt werden. Zum Transport kann die Sackkarre um die Drehachse der Räder der Karre gekippt werden, so dass die Last sich für den Transport auf ein Halteelement und auf ein Trageelement verteilt.

Für kleinere Lasten, wie zum Beispiel Prospektmaterial, welches auf Informationsveranstaltungen, insbesondere Messen, oftmals in großen Mengen verteilt und von Interessenten mitgenommen wird, ist das Prinzip der Sackkarre jedoch nicht geeignet, da ein sicherer, leichter und die Fortbewegung möglichst wenig behindernder und zuverlässiger Transport gewährleistet sein soll.

DE 202005008804 die als nächstliegender stand der technik angesehen wird offenbart einen Behälter zum Befestigen an einer Trage- und Rolleinrichtung, die eine Trageplatte und mindestens eine daran befestigte Rolle aufweist, wobei der Behälter einen Bodenbereich aufweist, wobei der Bodenbereich Aussparungen aufweist, zwischen welchen ein flächiger Abschnitt gebildet ist, wobei die mindestens eine Rolle derart durch mindestens eine der Aussparungen hindurchführbar ist, dass die Trageplatte im Inneren des Behälters positionierbar ist und dass die mindestens eine Rolle aus dem Bodenbereich des Behälters nach außen hin vorsteht.

Es ist eine Aufgabe der vorliegenden Erfindung, einen kostengünstigen Transport von Lasten zu ermöglichen.

Diese Aufgabe wird durch eine Transportvorrichtung und durch ein Verfahren zum Montieren einer Transportvorrichtung mit den Merkmalen gemäß den unabhängigen Patentansprüchen gelöst.

Gemäß einem exemplarischen Ausführungsbeispiel der Erfindung ist eine Transportvorrichtung geschaffen, wobei die Transportvorrichtung einen (zum Beispiel faltbaren) Behälter (zum Beispiel aus Karton), eine erste Trage- und Rolleinrichtung, die an dem Behälter befestigt ist, und eine zweite Trage- und Rolleinrichtung aufweist, die an dem Behälter befestigt ist.

Gemäß einem anderen exemplarischen Ausführungsbeispiel der Erfindung ist ein Verfahren zum Montieren einer Transportvorrichtung geschaffen, wobei bei dem Verfahren optional ein faltbarer Behälter entfaltet wird, eine erste Trage- und Rolleinrichtung an dem Behälter befestigt wird und eine zweite Trage- und Rolleinrichtung an dem Behälter befestigt wird.

Gemäß einem exemplarischen Ausführungsbeispiel der Erfindung ist eine (zum Beispiel reversibel montierbare und demontierbare)
Transportvorrichtung, zum Beispiel ein Trolley aus Karton, geschaffen, bei dem zwei separat voneinander vorgesehene Trage- und Rolleinrichtungen an dem Behälter befestigt werden können. Durch das separate Vorsehen zweier getrennter Trage- und Rolleinrichtungen kann es erfindungsgemäß entbehrlich sein, die gesamte Bodenplatte des Behälters mit Material abzudecken. Dadurch kann Material eingespart werden, Gewicht eingespart werden und simultan die Stabilität und Belastungsfähigkeit der Transportvorrichtung im Wesentlichen konstant gehalten werden. Dies ermöglicht nicht nur eine kostengünstige Herstellung, sondern auch eine einfache Lagerung und einen einfachen Transport von Komponenten der Transportvorrichtung. Die Transportvorrichtung kann aus nur zwei Komponenten, nämlich einem zum Beispiel zusammengefaltet lagerbaren Kartonbehälter und zwei baugleichen Trage- und Rolleinrichtungen, ausgestattet werden kann.

Somit kann durch Entfalten eines flach zusammengefalteten Kartons ein durch Seitenwände begrenztes Aufnahmevolumen definiert werden. An dem entfalteten Karton können dann - innen oder außen - die Rollen und die Stützflächen installiert werden, womit der Trolley mit nur wenigen Handgriffen betriebsbereit gemacht werden kann.

Ein solches leichtgewichtiges und leicht handhabbares System kann zum kostengünstigen und stabilen Transportieren von Gütern des täglichen Bedarfs, wie zum Beispiel Waschmittelkartons oder Weinkartons, dienen, wobei ein Anheben solcher schweren Güter aufgrund der rollenden Fortbewegungsmöglichkeit entbehrlich wird. Ein solcher Trolley kann als Einwegsystem verwendet werden.

Im Weiteren werden bevorzugte Ausgestaltungen der erfindungsgemäßen Transportvorrichtung beschrieben. Diese Ausgestaltungen gelten auch für das Verfahren.

Die erste Trage- und Rolleinrichtung kann eine erste Trageplatte und mindestens eine daran befestigte Rolle aufweisen, wobei die erste Trageplatte an dem Behälter befestigt werden kann. Die zweite Trage - und Rolleinrichtung kann eine zweite Trageplatte und mindestens eine daran befestigte zweite Rolle aufweisen, wobei die zweite Trageplatte an dem Behälter befestigt werden kann. Mittels Vorsehens zweier separater und nicht zusammenhängender langgestreckter rechteckiger Trageplatten und daran befestigter Rollen ist ein stabiler Transport des Trolleys bei simultan erreichbaren signifikanten Materialeinsparungen ermöglicht. Die Trage- und Rolleinrichtungen können eine Tragefunktion ausüben, da die Trageplatte zur Gewichtsaufnahme einer zu transportierenden Last und des Behältergewichts beitragen. Die Trage- und Rolleinrichtungen können eine Rollfunktion ausüben, da die Rollen oder Räder eine rollende Fortbewegung des Behälters ermöglichen.

Die erste Trage- und Rolleinrichtung und die zweite Trage- und Rolleinrichtung können separat voneinander vorgesehen werden. Dies ermöglicht es zum Beispiel, die beiden Trage- und Rolleinrichtungen baugleich vorzusehen, aber an unterschiedlichen Stellen der Bodenplatte des Behälters anzuordnen. In bestimmungsgemäßer Fortbewegungsrichtung kann sich eine der Trageplatten entlang eines linken Rands der Behälterunterseite in Fortbewegungsrichtung erstrecken, wohingegen sich die andere der Trageplatten entlang eines rechten Rands der Behälterunterseite in Fortbewegungsrichtung erstrecken kann.

Die Trage- und Rolleinrichtungen können an einem ersten Bereich eines Bodens (das heißt von außen) des Behälters befestigt werden, zum Beispiel mittels einer Klebeverbindung. Dies ermöglicht eine besonders kostengünstige Herstellung der Transportvorrichtung. Alternativ sind andere Befestigungsmöglichkeiten möglich, zum Beispiel eine Schweißverbindung, eine Klemmverbindung, eine Klettverbindung, eine Schnappverbindung, oder andere form- und/oder kraftschlüssige Verbindungen.

Der Boden des Behälters kann eine erste Aussparung und eine zweite Aussparung aufweisen. Die erste Trage- und Rolleinrichtung kann in den Behälter derart eingelegt sein, dass sich ein Teil der ersten Trage- und Rolleinrichtung durch die erste Aussparung durch den Boden des Behälters hindurcherstreckt und ein anderer Teil der ersten Trage- und Rolleinrichtung am Boden des Behälters innenseitig aufliegt. Die zweite Trage- und Rolleinrichtung kann in den Behälter derart eingelegt sein, dass sich ein Teil der zweiten Trage- und Rolleinrichtung durch die zweite Aussparung durch den Boden des Behälters hindurcherstreckt und ein anderer Teil der zweiten Trage- und Rolleinrichtung am Boden des Behälters innenseitig aufliegt. Mit anderen Worten können von innen her die Trage- und Rolleinrichtungen in den Behälter eingelegt und durch die Bodenlöcher hindurchgeführt werden, so dass die Rollen zum rollenden Transport freigelegt werden können und die tragende Komponente der Trage- und Rolleinrichtung im Inneren des Behälters dessen Bodenfläche teilweise bedeckt.

Bedarfsweise kann noch eine Abdeckplatte über die in den Behälter eingelegte Trage- und Rolleinrichtungen in dem Behälter aufgesetzt werden, so dass dann die Trage- und Rolleinrichtungen zwischen Behälterboden und Abdeckplatte (die zum Beispiel auch aus Karton vorgesehen sein kann) sicher und transportbereit gelagert werden können.

Es ist ferner möglich, dass an den Trage- und Rolleinrichtungen Überstände vorgesehen sind, die mit entsprechenden Nuten in den Behälterwänden in Eingriff gebracht werden können, so dass eine stabile Befestigung erreicht ist. Die Rollen können dann durch den Behälterboden hindurchtreten, um die Rollfunktion wahrzunehmen.

Die Transportvorrichtung kann eine Stützeinrichtung mit einem ersten Endstück und einem zweiten Endstück aufweisen. Die erste Trage- und Rolleinrichtung kann eine erste Befestigungsnut (insbesondere ein Sackloch in der Trageplatte) aufweisen, die an dem ersten Endstück befestigbar ist oder befestigt ist. Die zweite Trage- und Rolleinrichtung kann eine zweite Befestigungsnut (insbesondere ein Sackloch in der Trageplatte) aufweisen, die an dem zweiten Endstück befestigbar oder befestigt ist. Eine solche Stützeinrichtung, die zum Beispiel U-förmig gestaltet sein kann, kann somit zum Stützen einer Rückwand des Behälters und/oder als Handgriff eingerichtet sein und sich zumindest teilweise im Inneren des Behälters befinden. Die Stützeinrichtung kann auch aus den Behältern herausragen, um dann zum Beispiel als Handgriff zu fungieren. Durch die Verbindung eines U-förmigen Bauteils an den beiden Endabschnitten des "U" mit den Befestigungsnuten der Trage- und Rolleinrichtungen kann die Stabilität der beiden Trage- und Rolleinrichtungen verbessert werden, und es kann gleichzeitig eine Rückwand des Behälters mechanisch gestärkt werden, um auch relative schwere Lasten transportieren zu können. Synergistisch kann die Stützeinrichtung auch noch als Handgriff dienen, so dass dann eine Vielzahl von Funktionen durch die U-förmige Stützeinrichtung gleichzeitig wahrgenommen werden kann.

Der Behälter kann aus zumindest einem der Materialien Karton, Wellpappe, Kunststoff, Blech und Holz hergestellt werden. Bevorzugt ist hierbei eine Herstellung aus Karton oder Wellpappe, da diese Materialen eine kostengünstige Fertigung und eine flexible Formgebung ermöglichen, sodass mit geringem Aufwand und hoher Flexibilität ein stabiler und zuverlässiger Behälter gebildet werden kann. Es liegt insbesondere auch im Bereich der Erfindung, sämtliche Komponenten der Transportvorrichtung, nämlich den Behälter und die Trage- und Rolleinrichtung, im Wesentlichen aus Wellpappe oder Karton vorzusehen und somit die Fertigungskosten des Gesamtsystems herabzusetzen. Alternativ können diese Komponenten jedoch auch aus Kunststoff und/oder Metall hergestellt werden.

Der Behälter kann in seinem Inneren mindestens eine Trennwand aufweisen, mittels welcher mindestens eine Trennwand ein Stauvolumen im Inneren des Behälters in eine Mehrzahl von Teilvolumina aufteilbar ist. Eine solche Trennwand kann einfach in den Behälter eingesetzt werden und zum Beispiel auch aus Karton oder Wellpappe vorgesehen sein. Eine solche Trennwand ermöglicht es, unterschiedliche Volumenbereiche innerhalb des Behälters voneinander zu separieren, zum Beispiel um getrennte Stauräume für mehrere (zum Beispiel sechs oder acht) Weinflaschen zu schaffen, die dann in dem Behälter ohne Kontakt miteinander transportiert werden können. Dann kann der Behälter in kostengünstiger Weise für das bequeme Transportieren dieser Weinflaschen verwendet werden, wodurch die Benutzerfreundlichkeit gegenüber herkömmlichen Getränke-Transportvorrichtungen erhöht werden kann.

Somit eignet sich der Behälter insbesondere zum Transportieren von Getränken, insbesondere von Wein oder Mineralwasser. Allerdings sind geeignete Anwendungsgebiete der Erfindung nicht auf Getränke beschränkt. So kann der Behälter zum Beispiel auch zum Transportieren von Büromaterialien, insbesondere von Papier oder Prospekten, verwendet werden. Grundsätzlich kann der Behälter für alles Transportierbare verwendet werden, so zum Beispiel auch im Bürobereich oder auf Messen. Es ist insbesondere möglich, Büropapier als zu transportierendes Gut einzusetzen. Der Behälter kann für alle Gegenstände anstelle einer Tragetüte eingesetzt werden, wobei mit dem erfindungsgemäßen Behälter der Benutzerkomfort, die Stabilität und das maximale Transportgewicht erhöht werden können.

Insbesondere kann bei dem Behälter mindestens eine Außenseite der Behälterwand bedruckt sein. Es können auch alle Wände des Behälters (innen und/oder außen) bedruckt sein, insbesondere jede Komponente aus Karton oder Pappe. Mit anderen Worten ist es möglich, die Behälterwände von außen mit allen möglichen Drucken zu versehen, zum Beispiel Hinweise auf ein Unternehmen, Hinweise auf den Inhalt des Behälters, Bedienungsanweisungen, Warnhinweise, etc.

Der Behälter kann insbesondere quaderförmig, halbkugelförmig oder halbzylinderförmig ausgebildet sein. Auch eine kugelförmige Geometrie ist möglich. Bei Vorsehen eines halbzylinderförmigen Behälters kann dieser mit einer der drei planen Flächen an den Trageflächen der mindestens zwei Trage- und Rolleinrichtungen befestigt werden.

Im Folgenden werden zur weiteren Erläuterung und zum besseren Verständnis der vorliegenden Erfindung Ausführungsbeispiele unter Bezugnahme auf die beigefügten Zeichnungen näher beschrieben.

Es zeigen:
- Fig. 1: eine Transportvorrichtung gemäß einem exemplarischen Ausführungsbeispiel der Erfindung.
- Fig. 2 bis 4: unterschiedliche Ansichten einer Trage- und Rolleinrichtung einer Transportvorrichtung gemäß einem exemplarischen Ausführungsbeispiel der Erfindung.
- Fig.5 bis 7: Transportvorrichtungen gemäß exemplarischen Ausführungsbeispielen der Erfindung.

Gleiche oder ähnliche Komponenten in unterschiedlichen Figuren sind mit gleichen Bezugsziffern versehen.

Die Darstellungen der Figuren sind schematisch und nicht maßstäblich.

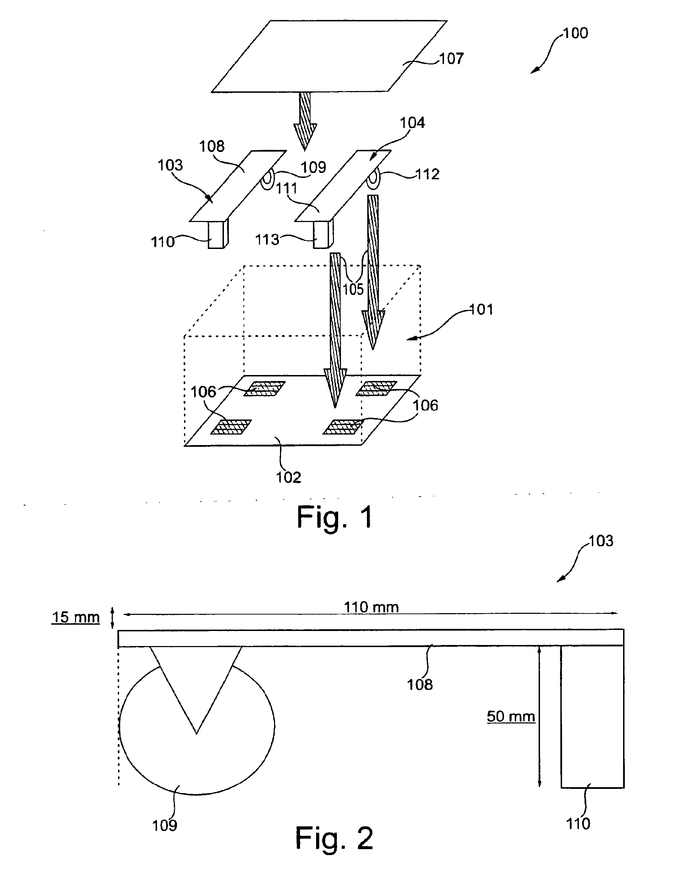

Im Weiteren wird bezugnehmend auf Fig. 1 eine Transportvorrichtung 100, das heißt ein Trolley, gemäß einem exemplarischen Ausführungsbeispiel der Erfindung beschrieben.

Wie in Fig. 1 schematisch angedeutet ist, weist die Transportvorrichtung 100 einen quaderförmigen Kartonbehälter 101 auf, der durch Faltung aus einem flächigen, zusammengefalteten Zustand in einen in Fig. 1 gezeigten großvolumigen Zustand überführt werden kann. Der Behälter ist in Fig. 1 durch eine Bodenplatte 102 und durch mit gestrichelten Linien angedeuteten weiteren Seitenflächen schematisiert ist.

Die Transportvorrichtung 100 weist darüber hinaus eine erste Trage- und Rolleinrichtung 103 sowie eine zweite Trage- und Rolleinrichtung 104 auf. Die beiden Trage- und Rolleinrichtungen 103 und 104 sind baugleich. Wie mit Pfeilen 105 angedeutet ist, können die Trage- und Rolleinrichtungen 103, 104 von oben in ein Inneres des Behälters 101 eingeführt werden und durch Löcher 106 in der Bodenplatte 102 hindurchgeführt werden. Bedarfsweise kann dann noch eine Kartonabdeckplatte 107 auf die in den Löchern 106 versenkten und auf der Bodenplatte 102 gelagerten Trage - und Rolleinrichtungen 103, 104 aufgesetzt werden, was der montierten Anordnung 100 zusätzliche Stabilität verleiht.

Wie in Fig. 1 gezeigt, weist die erste Trage- und Rolleinrichtung 103 eine erste langgestreckte rechteckige Trageplatte 108, eine an einer Unterseite der Trageplatte 108 befestigte erste Rolle 109 und ein klotzartiges Abstützelement 110 auf. Entsprechend weist die zweite Trage- und Rolleinrichtung 104 eine zweite rechteckige langgestreckte Trageplatte 111, eine an der Unterseite der Trageplatte 111 befestigte zweite Rolle 112 und ein an der Unterseite der zweiten Trageplatte 111 befestigtes zweites Abstützelement 113 auf.

Der Behälter 101 ist aus Karton gefertigt, so dass der Trolley 100 als Einwegtrolley verwendet werden kann. Zum Beispiel können in dem Trolley 100 Getränke, insbesondere Wein, oder kann Waschmittel, etc. transportiert werden. Beim Transport von Wein können zum Beispiel sechs Flaschen Wein in dem Trolley 100 transportiert werden, die dann mittels optionaler Trennwände innerhalb des Behälters 101 (nicht gezeigt in der Figur) voneinander abgetrennt werden, was einen direkten Kontakt der Weinflaschen vermeidet. Bei Vorsehen einer Einlegeplatte 107 ist die Transportvorrichtung 101 insbesondere zum Transport von Schüttgut wie Waschmittel geeignet, da dann ein Entweichen des Schüttguts durch die Löcher 106 mittels Vorsehens der Abdeckfläche 107 vermieden oder stark unterdrückt werden kann.

Zum Transportieren des Trolleys 100 kann dieser so gekippt werden, dass nur die Rollen 109, 112 den Boden berühren, nicht hingegen die Bodenstützelemente 110, 113. Zum Absetzen des gekippt transportierten Trolleys 100 kann dann der Trolley 100 zurückgekippt werden, so dass auch die Bodenstützelemente 110, 113 den Boden berühren.

Fig. 2 zeigt eine vergrößerte Darstellung der ersten Trage- und Rolleinrichtung 103 und ihrer Dimensionen gemäß einem exemplarischen Ausführungsbeispiel der Erfindung.

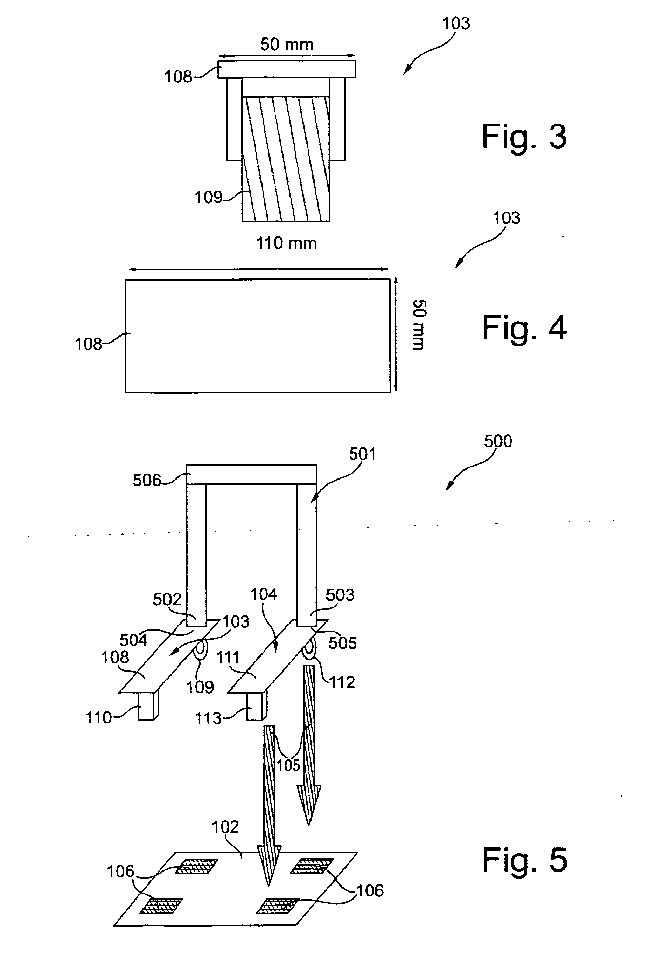

Während Fig. 2 eine Seitenansicht der Trage- und Rolleinrichtung 103 zeigt, zeigt Fig. 3 eine Frontdarstellung.

Fig. 4 zeigt eine Oberansicht der ersten Trage- und Rolleinrichtung 103.

Fig. 5 zeigt eine Transportvorrichtung 500 gemäß einem anderen Ausführungsbeispiel der Erfindung.

Gemäß Fig. 5 ist im Unterschied zu Fig. 1 zusätzlich eine U-förmige Stützeinrichtung 501 mit einem ersten Endstück 502 und einem zweiten Endstück 503 vorgesehen. Die erste Trage- und Rolleinrichtung 103 weist in einem hinteren Abschnitt eine erste Befestigungsnut 504 auf, in welcher das erste Endstück 502 mit einer Klickverbindung einrastend befestigt werden kann. In einer zweiten Befestigungsnut 505 in einem hinteren Abschnitt der zweiten Trageplatte 111 der zweiten Trage- und Rolleinrichtung 104 ist das zweite Endstück 503 der U-förmigen Stützeinrichtung 501 einrastend aufgenommen. Dadurch können die beiden Trage- und Rolleinrichtungen 103, 104 mittels des U-förmigen Verbindungselements 501 verbunden werden, und es kann simultan eine Rückwand des Behälters (nicht gezeigt in Fig. 5) strebenartig stabilisiert werden. Darüber hinaus kann die Stützeinrichtung 501 nur teilweise im Inneren des Behälters 101 untergebracht werden und teilweise aus dem Behälter 101 herausragen, so dass eine horizontal verlaufende Querstrebe 506 der Stützeinrichtung 501 simultan als Handgriff verwendbar ist.

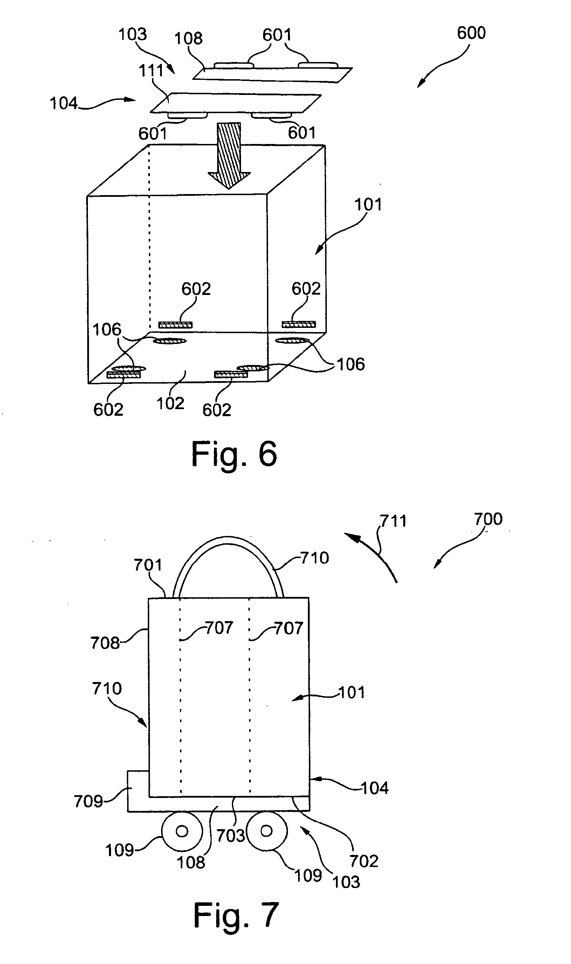

Im Weiteren wird bezugnehmend auf Fig. 6 eine Transportvorrichtung 600 gemäß einem anderen exemplarischen Ausführungsbeispiel der Erfindung beschrieben.

Das Ausführungsbeispiel gemäß Fig. 6 unterscheidet sich von dem Ausführungsbeispiel gemäß Fig. 1 im Wesentlichen dadurch, dass in Seitenwänden des Behälters 101 Befestigungsnuten 602 vorgesehen sind, die in entsprechende Überstände 601 an seitlichen Endabschnitten der Trage- und Rolleinrichtung 103 bzw. 104 eingreifen und somit beim simultanen Hindurchführen der Rollen (nicht gezeigt in Fig. 6) der Trage - und Rolleinrichtungen 103, 104 durch die korrespondierenden Löcher 106 in der Bodenplatte 102 des Behälters 101 eine verbesserte Stabilität bewirken können. Fig. 6 stellt somit eine besonders stabile Konfiguration dar.

Fig. 7 zeigt eine Transportvorrichtung 700 gemäß einem exemplarischen Ausführungsbeispiel der Erfindung in einem vollständig montierten Zustand.

Die Transportvorrichtung 700 weist einen faltbaren Behälter 101 auf, der als Karton gebildet ist und in Fig. 7 entfaltet ist, um eine quaderförmigen Gestalt mit einem inneren Aufnahmevolumen zu bilden. Eine obere Deckplatte 701 des Behälters 101 kann geöffnet werden, um Material, das in dem Behälter 101 aufbewahrt ist, zu entnehmen oder um solches Material einzufüllen. Eine Bodenplatte des Behälters 101 ist an zwei Trage- und Rolleinrichtungen 103, 104 (die zweite Trage- und Rolleinrichtung 104 ist in Fig. 7 verdeckt) mittels einer Klebeverbindung befestigt, d.h. verklebt.

Jede der Trage- und Rolleinrichtungen 103, 104 weist eine Trageplatte 108, 111 und zwei daran angebrachte Rollen 109, 112 auf, wobei die Trageplatten 108, 111 an der Unterseite 702 (d.h. an der äußeren Bodenfläche) des Behälters 101 mittels einer Klebeverbindung 703 befestigt ist.

Der Behälter 101 ist ein Kartonbehälter. Die Trage- und Rolleinrichtungen 103, 104 können aus Plastik, Metall, Holz, etc. hergestellt sein.

Wie in Fig. 7 schematisch angedeutet ist, kann bei der Transportvorrichtung 700 im Inneren des Behälters 101 eine Mehrzahl von Trennwänden 707 vorgesehen sein, wobei mittels der Trennwände 707 ein Stauvolumen im Inneren des Behälters 101 in eine Mehrzahl von Teilvolumina aufteilbar ist. Zum Beispiel kann jedes der Teilvolumina zum Aufnehmen einer Weinflasche dienen.

Der Behälter 700 kann daher zum Beispiel zum Transportieren von Wein, oder alternativ zum Transportieren von Waschmitteln, zum Transportieren von Büromaterialien, etc. eingerichtet sein.

Eine Außenseite 708 des Behälters 101 kann bedruckt sein. Der Behälter 700 ist quaderförmig.

Ein Behälterstützelement 709 kann sich von einem trolleyrückseitigen Endabschnitt der Bodenplatte 108 aus vertikal erstrecken. Dieses dient dem rückseitigen Abstützen des Behälters 101 nach Befestigung auf den Trage- und Rolleinrichtungen 103, 104, zum Beispiel wenn eine Kippung der Vorrichtung 700 in einer Pfeilrichtung 711 erfolgt.

Das Behälterstützelement 709 erstreckt sich im Wesentlichen senkrecht zu der Trageplatte 108 der Trage- und Rolleinrichtung 103 und erstreckt sich im Wesentlichen parallel zu einer vertikalen Seitenwand 710 des Behälters 101. Das Behälterstützelement 709 hat im Querschnitt gemäß Fig. 7 gemeinsam mit der Trageplatte 108 eine im Wesentlichen L-förmige Gestalt.

Ferner ist eine flexible Halteschlaufe 710 oder irgendein anderer Haltegriff oder Tragehilfe an dem Container 101 vorgesehen, wobei alternativ ein Haltegriff auch durch ein nach oben hin ausgedehntes Behälterstützelement 709 gebildet sein kann.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Transportvorrichtung (100), aufweisend:
einen faltbaren Behälter (101);
eine erste Trage- und Rolleinrichtung (103), die an dem Behälter (101) befestigbar ist;
eine zweite Trage- und Rolleinrichtung (104), die an dem Behälter (101) befestigbar ist;
wobei die erste Trage- und Rolleinrichtung (103) eine erste Trageplatte (108) und mindestens eine daran befestigte erste Rolle (109) aufweist, wobei die erste Trageplatte (108) an dem Behälter (101) befestigt ist;
wobei die zweite Trage- und Rolleinrichtung (104) eine zweite Trageplatte (111) und mindestens eine daran befestigte zweite Rolle (112) aufweist, wobei die zweite Trageplatte (111) an dem Behälter (101) befestigt ist; und
wobei die erste Trage- und Rolleinrichtung (103) und die zweite Trage - und Rolleinrichtung (104) separat voneinander vorgesehen sind;
wobei ein Boden (102) des Behälters (101) eine erste Aussparung (106) und eine zweite Aussparung (106) aufweist;
wobei die erste Trage- und Rolleinrichtung (103) in den Behälter (101) derart eingelegt ist, dass sich ein Teil der ersten Trage- und Rolleinrichtung (103) durch die erste Aussparung (106) durch den Boden (102) des Behälters (101) hindurch erstreckt; und
wobei die zweite Trage- und Rolleinrichtung (104) in den Behälter (101) derart eingelegt ist, dass sich ein Teil der zweiten Trage- und Rolleinrichtung (104) durch die zweite Aussparung (106) durch den Boden (102) des Behälters (101) hindurch erstreckt.

2. Transportvorrichtung (100) nach Anspruch 1,
wobei die erste Trage- und Rolleinrichtung (103) in einem ersten Bereich eines Bodens (102) des Behälters (101) befestigt ist, insbesondere mittels einer Klebeverbindung befestigt ist;
wobei die zweite Trage- und Rolleinrichtung (104) in einem zweiten Bereich des Bodens (102) des Behälters (101) befestigt ist, insbesondere mittels einer Klebeverbindung befestigt ist.

3. Transportvorrichtung (500) nach Anspruch 1 oder 2,
aufweisend eine Stützeinrichtung (501) mit einem ersten Endstück (502) und mit einem zweiten Endstück (503);
wobei die erste Trage- und Rolleinrichtung (103) eine erste Befestigungsnut (504) aufweist, an der das erste Endstück (502) befestigbar ist;
wobei die zweite Trage- und Rolleinrichtung (104) eine zweite Befestigungsnut (505) aufweist, an der das zweite Endstück (503) befestigbar ist.

4. Transportvorrichtung (500) nach Anspruch 3,
wobei die Stützeinrichtung (501) U-förmig gestaltet ist.

5. Transportvorrichtung (500) nach Anspruch 3 oder 4,
wobei die Stützeinrichtung (501) als Handgriff gestaltet ist.

6. Transportvorrichtung (500) nach einem der Ansprüche 3 bis 5,
wobei die Stützeinrichtung (501) zumindest teilweise im Inneren des Behälters (101) angeordnet ist.

7. Transportvorrichtung (100) nach einem der Ansprüche 1 bis 6,
wobei der Behälter (101) aus zumindest einem Material der Gruppe bestehend aus Karton, Wellpappe, Kunststoff, Blech und Holz hergestellt ist.

8. Transportvorrichtung (700) nach einem der Ansprüche 1 bis 7,
mit mindestens einer Trennwand (707) innerhalb des Behälters (101), mittels welcher mindestens einen Trennwand (707) ein Stauvolumen im Inneren des Behälters (101) in eine Mehrzahl von Teilvolumina aufteilbar ist.

9. Transportvorrichtung (100) nach einem der Ansprüche 1 bis 8,
wobei der Behälter (101) zum Transportieren von Getränken, insbesondere von Wein, und/oder zum Transportieren von Schüttgut, insbesondere von Waschmittel, und/oder zum Transportieren von Büromaterialien, insbesondere von Papier, eingerichtet ist.

10. Transportvorrichtung (100) nach einem der Ansprüche 1 bis 9,
bei dem mindestens eine Außenseite und/oder mindestens eine Innenseite des Behälters (101) bedruckt ist.

11. Transportvorrichtung (100) nach einem der Ansprüche 1 bis 10,
wobei der Behälter (101) quaderförmig, halbkugelförmig oder halbzylinderförmig ausgebildet ist.

12. Transportvorrichtung (100) nach einem der Ansprüche 1 bis 11,
wobei die erste Trage- und Rolleinrichtung (103) und/oder die zweite Trage- und Rolleinrichtung (104) ein Bodenstützelement (110, 113) aufweist, mittels welchem die Transportvorrichtung (100) auf einem Boden abstützbar ist.

13. Transportvorrichtung (100) nach einem der Ansprüche 1 bis 12, eingerichtet als Einweg-Transportvorrichtung (100) und/oder eingerichtet als Trolley.

14. Verfahren zum Montieren einer Transportvorrichtung (100), wobei das Verfahren aufweist:
Entfalten eines faltbaren Behälters (101);
Befestigen einer ersten Trage- und Rolleinrichtung (103) an dem Behälter (101);
wobei die erste Trage- und Rolleinrichtung (103) eine erste Trageplatte (108) und mindestens eine daran befestigte erste Rolle (109) aufweist, wobei die erste Trageplatte (108) an dem Behälter (101) befestigt wird; und
Befestigen einer zweiten Trage- und Rolleinrichtung (104) an dem Behälter (101);
wobei die zweite Trage- und Rolleinrichtung (104) eine zweite Trageplatte (111) und mindestens eine daran befestigte zweite Rolle (112) aufweist, wobei die zweite Trageplatte (111) an dem Behälter (101) befestigt wird;
wobei die erste Trage- und Rolleinrichtung (103) und die zweite Trage - und Rolleinrichtung (104) separat voneinander vorgesehen werden,
wobei ein Boden (102) des Behälters (101) eine erste Aussparung (106) und eine zweite Aussparung (106) aufweist;
wobei die erste Trage- und Rolleinrichtung (103) in den Behälter (101) derart eingelegt ist, dass sich ein Teil der ersten Trage- und Rolleinrichtung (103) durch die erste Aussparung (106) durch den Boden (102) des Behälters (101) hindurch erstreckt; und
wobei die zweite Trage- und Rolleinrichtung (104) in den Behälter (101) derart eingelegt ist, dass sich ein Teil der zweiten Trage- und Rolleinrichtung (104) durch die zweite Aussparung (106) durch den Boden (102) des Behälters (101) hindurch erstreckt.

## Claims

1. A transport device (100) comprising:
a foldable container (101);
a first carrying and rolling unit (103) which is attachable to the container (101);
a second carrying and rolling unit (104) which is attachable to the container (101);
wherein the first carrying and rolling unit (103) comprises a first carrying plate (108) and at least one first roll (109) attached thereto, wherein the first carrying plate (108) is attached to the container (101);
wherein the second carrying and rolling unit (104) comprises a second carrying plate (111) and at least one second roll (112) attached thereto, wherein the second carrying plate (111) is attached to the container (101); and
wherein the first carrying and rolling unit (103) and the second carrying and rolling unit (104) are arranged separate from each other;
wherein a base (102) of the container (101) comprises a first recess (106) and a second recess (106);
wherein the first carrying and rolling unit (103) is inserted in the container (101) in such a way that a portion of the first carrying and rolling unit (103) extends through the first recess (106) through the base (102) of the container (101); and
wherein the second carrying and rolling unit (104) is inserted in the container (101) in such a way that a portion of the second carrying and rolling unit (104) extends through the second recess (106) through the base (102) of the container (101).

2. The transport device (100) according to claim 1,
wherein the first carrying and rolling unit (103) is attached, particularly is attached by an adhesive connection, in a first region of a base (102) of the container (101);
wherein the second carrying and rolling unit (104) is attached, particularly is attached by an adhesive connection, in a second region of the base (102) of the container (101).

3. The transport device (500) according to claim 1 or 2,
comprising a supporting unit (501) with a first end section (502) and with a second end section (503);
wherein the first carrying and rolling unit (103) comprises a first attaching groove (504) to which the first end section (502) is attachable;
wherein the second carrying and rolling unit (104) comprises a second attaching groove (505) to which the second end section (503) is attachable.

4. The transport device (500) according to claim 3,
wherein the supporting unit (501) is U-shaped.

5. The transport device (500) according to claim 3 or 4,
wherein the supporting unit (501) is shaped as a hand grip.

6. The transport device (500) according to any one of the claims 3 to 5,
wherein the supporting unit (501) is at least partially disposed inside the container (101).

7. The transport device (100) according to any one of the claims 1 to 6,
wherein the container (101) is made from at least one material of the group consisting of card board, corrugated card board, plastic, sheet metal, and wood.

8. The transport device (700) according to one of the claims 1 to 7,
having at least one separating wall (707) within the container (101), by which at least one separating wall (707) an impoundment volume inside the container (101) is segmentable into a plurality of partial volumes.

9. The transport device (100) according to one of the claims 1 to 8,
wherein the container (101) is adapted for transporting beverages, particularly wine, and/or for transporting bulk goods, particularly washing agents, and/or for transporting office supplies, particularly paper.

10. The transport device (100) according to one of the claims 1 to 9, of which at least one exterior face and/or at least one interior face of the container is printed.

11. The transport device (100) according to one of the claims 1 to 10,
wherein the container (101) is cuboidal shaped, hemispheric shaped, or half cylindrical shaped.

12. The transport device (100) according to one of the claims 1 to 11,
wherein the first carrying and rolling unit (103) and/or the second carrying and rolling unit (104) comprises a ground supporting element (110, 113) by which the transport device (100) is supportable at a ground.

13. The transport device (100) according to one of the claims 1 to 12,
adapted as a disposable transport device (100) and/or adapted as a trolley.

14. A method for assembling a transport device (100), wherein the method comprises:
unfolding a foldable container (101);
attaching a first carrying and rolling unit (103) to the container (101);
wherein the first carrying and rolling unit (103) comprises a first carrying plate (108) and at least one first roll (109) attached thereto, wherein the first carrying plate (108) is attached to the container (101); and
attaching a second carrying and rolling unit (104) to the container (101);
wherein the second carrying and rolling unit (104) comprises a second carrying plate (111) and at least one second roll (112) attached thereto, wherein the second carrying plate (111) is attached to the container (101);
wherein the first carrying and rolling unit (103) and the second carrying and rolling unit (104) are arranged separate from each other;
wherein a base (102) of the container (101) comprises a first recess (106) and a second recess (106);
wherein the first carrying and rolling unit (103) is inserted in the container (101) in such a way that a portion of the first carrying and rolling unit (103) extends through the first recess (106) through the base (102) of the container (101); and
wherein the second carrying and rolling unit (104) is inserted in the container (101) in such a way that a portion of the second carrying and rolling unit (104) extends through the second recess (106) through the base (102) of the container (101).

## Revendications

1. Dispositif de transport (100) présentant :
un récipient pliable (101) ;
un premier dispositif de support et de roulement (103) qui peut être fixé sur le récipient (101) ;
un second dispositif de support et de roulement (104) qui peut être fixé sur le récipient (101) ;
sachant que le premier dispositif de support et de roulement (103) présente une première plaque de support (108) et au moins un premier rouleau (109) fixé dessus, sachant que la première plaque de support (108) est fixée sur le récipient (101) ;
sachant que le second dispositif de support et de roulement (104) présente une seconde plaque de support (111) et au moins un second rouleau (112) fixé dessus, sachant que la seconde plaque de support (111) est fixée sur le récipient (101) ; et
sachant que le premier dispositif de support et de roulement (103) et le second dispositif de support et de roulement (104) sont prévus séparément l'un de l'autre ;
sachant qu'un fond (102) du récipient (101) présente un premier évidement (106) et un second évidement (106) ;
sachant que le premier dispositif de support et de roulement (103) est introduit dans le récipient (101) de telle manière qu'une partie du premier dispositif de support et de roulement (103) s'étende au travers du premier évidement (106) par le fond (102) du récipient (101) ; et
sachant que le second dispositif de support et de roulement (104) est introduit dans le récipient (101) de telle manière qu'une partie du second dispositif de support et de roulement (104) s'étende au travers du second évidement (106) par le fond (102) du récipient (101).

2. Dispositif de transport (100) selon la revendication 1,
sachant que le premier dispositif de support et de roulement (103) est fixé dans une première zone d'un fond (102) du récipient (101), en particulier est fixé à l'aide d'un assemblage collé ;
sachant que le second dispositif de support et de roulement (104) est fixé dans une seconde zone du fond (102) du récipient (101), en particulier est fixé à l'aide d'un assemblage collé.

3. Dispositif de transport (500) selon la revendication 1 ou 2, présentant un dispositif d'appui (501) avec une première pièce d'extrémité (502) et une seconde pièce d'extrémité (503) ;
sachant que le premier dispositif de support et de roulement (103) présente une première rainure de fixation (504), sur laquelle peut être fixée la première pièce d'extrémité (502) ;
sachant que le second dispositif de support et de roulement (104) présente une seconde rainure de fixation (505), sur laquelle peut être fixée la seconde pièce d'extrémité (503).

4. Dispositif de transport (500) selon la revendication 3, sachant que le dispositif d'appui (501) est en forme de U.

5. Dispositif de transport (500) selon la revendication 3 ou 4, sachant que le dispositif d'appui (501) est conçu comme une manette.

6. Dispositif de transport (500) selon l'une quelconque des revendications 3 à 5, sachant que le dispositif d'appui (501) est disposé au moins en partie à l'intérieur du récipient (101).

7. Dispositif de transport (100) selon l'une quelconque des revendications 1 à 6, sachant que le récipient (101) est fabriqué au moins en un matériau du groupe se composant de carton, de carton ondulé, de plastique, de tôle et de bois.

8. Dispositif de transport (700) selon l'une quelconque des revendications 1 à 7, avec au moins une paroi de séparation (707) dans le récipient (101), à l'aide de laquelle au moins une paroi de séparation (707), un volume de retenue peut être divisé à l'intérieur du récipient (101) en une pluralité de volumes partiels.

9. Dispositif de transport (100) selon l'une quelconque des revendications 1 à 8, sachant que le récipient (101) est aménagé pour le transport de boissons, en particulier de vin et/ou pour le transport de produits en vrac, en particulier de produits de lavage, et/ou pour le transport de matériels de bureaux, en particulier de papier.

10. Dispositif de transport (100) selon l'une quelconque des revendications 1 à 9, pour lequel au moins un côté extérieur et/ou au moins un côté intérieur du récipient (101) est imprimé.

11. Dispositif de transport (100) selon l'une quelconque des revendications 1 à 10, sachant que le récipient (101) est réalisé en forme de parallélépipède, d'hémisphère ou de demi-cylindre.

12. Dispositif de transport (100) selon l'une quelconque des revendications 1 à 11, sachant que le premier dispositif de support et de roulement (103) et/ou le second dispositif de support et de roulement (104) présente un élément d'appui de fond (110, 113), à l'aide duquel le dispositif de transport (100) peut être en appui sur un fond.

13. Dispositif de transport (100) selon l'une quelconque des revendications 1 à 12, aménagé comme un dispositif de transport unidirectionnel (100) et/ou comme un trolley.

14. Procédé de montage d'un dispositif de transport (100), sachant que le procédé présente les étapes suivantes :
déplier un récipient pliable (101) ;
fixer un premier dispositif de support et de roulement (103) sur le récipient (101) ;
sachant que le premier dispositif de support et de roulement (103) présente une première plaque de support (108) et au moins un premier rouleau fixé dessus (109), sachant que la première plaque de support (108) est fixée sur le récipient (101) ; et
fixer un second dispositif de support et de roulement (104) sur le récipient (101) ;
sachant que le second dispositif de support et de roulement (104) présente une seconde plaque de support (111) et au moins un second rouleau (112) fixé dessus, sachant que la seconde plaque de support (111) est fixée sur le récipient (101) ;
sachant que le premier dispositif de support et de roulement (103) et le second dispositif de support et de roulement (104) sont prévus séparément l'un de l'autre,
sachant qu'un fond (102) du récipient (101) présente un premier évidement (106) et un second évidement (106) ;
sachant que le premier dispositif de support et de roulement (103) est introduit dans le récipient (101) de telle manière qu'une partie du premier dispositif de support et de roulement (103) s'étende au travers du premier évidement (106) par le fond (102) du récipient (101) ; et
sachant que le second dispositif de support et de roulement (104) est introduit dans le récipient (101) de telle manière qu'une partie du second dispositif de support et de roulement (104) s'étende au travers du second évidement (106) par le fond (102) du récipient (101).
